# EUROPEAN PATENT APPLICATION

(11) **EP 3 579 027 A1**
(43) Date of publication of application: **11.12.2019**
(21) Application number: 17894929.3
(22) Date of filing: 31.01.2017
(51) Int. Cl.: G02B 3/00, B29C 45/14, B29C 51/10, B29C 53/04, B29C 69/00, G02C 7/10

(54) **METHOD FOR MANUFACTURING FUNCTIONAL OPTICAL LENS**

(71) Applicant: Daicel Aboshi Sangyo Co., Ltd., Himeji-shi, Hyogo 671-1281 (JP)
(72) Inventor: YOSHIMURA, Takashi, Hyogo 671-1281 (JP)
(74) Representative: Grünecker Patent- und Rechtsanwälte PartG mbB
(86) International application number: PCT/JP2017/003296
(87) International publication number: WO 2018/142443

(57) **Abstract**

A method for manufacturing a functional optical lens includes: bending a functional optical sheet formed by laminating a thermoplastic resin sheet layer including a thermoplastic resin to a functional optical film layer including a functional optical film; forming a functional optical laminate by laminating a thermoplastic resin composition by injection molding on the concave side of the functional optical sheet bent in the bending; and forming a functional optical lens by further laminating the thermoplastic resin composition by injection molding on the concave side of the functional optical sheet in the functional optical laminate formed in the forming the functional optical laminate.

## Description

### Technical Field

The present invention relates to a method for manufacturing an optical lens having a functionality.

### Background Art

Optical lenses having a functionality, such as a function of absorbing a specific wavelength or a function of preventing the glare of reflected light, are known in the related art. An optical lens having the functionality typically includes: a functional optical film layer having a function of absorbing a specific wavelength or a function of preventing the glare of reflected light; and a resin molding layer. For example, Patent Document 1 proposes a functional optical lens including a functional optical sheet constituted by laminating a functional optical film layer including a polyamide sheet layer, and a polyamide resin molding layer. The functional optical lens has features of having good processability and high solvent resistance as well as being light and capable of suppressing generations of distortion and color unevenness.

The functional optical lens disclosed in Patent Document 1 can be manufactured, for example, by heat fusing a polyamide resin composition to a functional optical sheet formed by laminating a polyamide sheet layer via an adhesive material layer to each of both surfaces of the functional optical film layer.

In addition, functional optical lens for a prescription (corrective) (hereinafter referred to as an "RX lens") has an increased thickness of the layer of the thermoplastic resin composition laminated to the functional optical sheet in order to match the correction requirement for an individual user.

### Citation List

### Patent Document

Patent Document 1: JP 4987297 B

### Summary of Invention

### Technical Problem

However, the method for manufacturing a functional optical lens disclosed in Patent Document 1 as described above has a problem that the material loss of the thermoplastic resin, such as the polyamide resin composition, may increase in manufacturing. In particular, RX lenses, which have an increased thickness of the resin layer portion, cause further material loss.

The present invention has been made in light of the problems described above and an object of the present invention is to provide a method for manufacturing a functional optical lens capable of reducing material loss of a thermoplastic resin generated during manufacturing a functional optical lens.

### Solution to Problem

A method for manufacturing a functional optical lens according to an embodiment of the present invention includes: bending a functional optical sheet to have a predetermined curved surface shape, the functional optical sheet formed by laminating a thermoplastic resin sheet layer including a thermoplastic resin to a functional optical film layer including a functional optical film; forming a functional optical laminate by laminating a thermoplastic resin composition by injection molding on the concave side of the functional optical sheet bent in the bending; and forming a functional optical lens by further laminating the thermoplastic resin composition by injection molding on the concave side of the functional optical sheet in the functional optical laminate formed in the forming the functional optical laminate.

According to the method described above, the thermoplastic resin composition can be laminated by injection molding in two stages: forming a functional optical laminate; and forming a functional optical lens. Thus, for example, after executing the forming the functional optical laminate and before executing the forming the functional optical lens, a quality inspection mainly based on a visual appearance inspection, and the like, can be performed on the functional optical laminate formed in the forming the functional optical laminate. Consequently, before executing the forming the functional optical lens, it is possible to check whether the functional optical laminate meets (passes) a predetermined quality criteria by the quality inspection and remove in advance the functional optical laminate that failed the quality inspection.

This can reduce the amount of material loss of the thermoplastic resin that fails the quality inspection compared to the manufacturing method of laminating the thermoplastic resin composition in a single injection molding to form the functional optical lens and checking pass/fail of the completed functional optical lens.

Thus, the method for manufacturing a functional optical lens according to the present invention provides capability to effectively reduce the material loss of the thermoplastic resin generated during manufacturing of the functional optical lens.

In addition, a method for manufacturing a functional optical lens according to an embodiment of the present invention further includes, in the method described above, performing a pass/fail test of the functional optical laminate formed by the forming the functional optical laminate, after executing the forming the functional optical laminate and before executing the forming the functional optical lens; wherein, in the forming the functional optical lens, the thermoplastic resin composition may be further laminated by injection molding on the concave side of the functional optical sheet in a functional optical laminate that has passed the pass/fail test of the performing the pass/fail test.

According to the method described above, before executing the forming the functional optical lens and after executing the forming the functional optical laminate, pass/fail of the functional optical laminate formed in the forming the functional optical laminate can be checked. Thus, the functional optical laminate that has failed the inspection can be removed in advance. Furthermore, the thermoplastic resin composition can be further laminated by injection molding in the forming the functional optical lens to the functional optical laminate that has passed the pass/fail test in the performing the pass/fail test.

Thus, the amount of material loss due to the thermoplastic resin that has failed the pass/fail test can be reduced compared to the manufacturing method of laminating the thermoplastic resin composition in a single injection molding to form the functional optical lens and performing the pass/fail test on the completed functional optical lens.

In addition, in the method for manufacturing a functional optical lens according to an embodiment of the present invention, the thermoplastic resin sheet layer and the thermoplastic resin composition in the method described above may be polyamide resin compositions.

According to the method described above, thermoplastic resin composition to be laminated to the functional optical sheet can be a polyamide resin composition. Thus, a functional optical lens that has excellent processability and solvent resistance and that is lightweight can be obtained.

In addition, in a method for manufacturing a functional optical lens according to an embodiment of the present invention, a thickness of the functional optical laminate formed in the forming the functional optical laminate may be from 1.5 to 2.5 mm, and a thickness of the functional optical lens formed in the forming the functional optical lens may be from 9 to 15 mm.

In addition, in a method for manufacturing a functional optical lens according to an embodiment of the present invention, an ultraviolet absorber may be added to the thermoplastic resin composition to be laminated by injection molding on the concave side of the functional optical sheet in the forming the functional optical laminate.

According to the method described above, the ultraviolet light absorber is added to the thermoplastic resin composition to be laminated in the forming the functional optical laminate, and thus it is possible to prevent removal of the ultraviolet absorber during cutting process, when the functional optical lens is processed to produce a finished lens.

In addition, in a method for manufacturing a functional optical lens according to an embodiment of the present invention, the functional optical lens in the method described above may have, as an optical function, at least one of an anti-glare property, photochromicity, or polarizability.

### Advantageous Effects of Invention

The present invention achieves an effect of being able to reduce the material loss of the thermoplastic resin generated during manufacturing the functional optical lens.

### Brief Description of Drawings

FIG. 1 is a cross-sectional view schematically illustrating an example of a polarizing sheet constituting a functional optical lens according to an embodiment of the present invention.
FIG. 2 is a flowchart illustrating an example of a method for manufacturing a functional optical lens according to an embodiment of the present invention.
FIG. 3 is a schematic diagram illustrating each step of the manufacturing method illustrated in FIG. 2.

### Description of Embodiments

### Circumstances of achieving an embodiment of the present invention

The present inventors diligently studied the method for manufacturing a functional optical lens disclosed in Patent Document 1. First, in a case where a functional optical lens is manufactured by the manufacturing method disclosed in Patent Document 1, a thermoplastic composition is laminated to a functional optical sheet (for example, a polarizing sheet) by injection molding. Here, in the case of an RX lens, when a functional optical lens is processed to produce a finished lens, the concave side (backside) of the functional optical lens needs to be cut according to the desired optical power and the like. Thus, the functional optical lens needs to have a thickness of about from 9 to 15 mm in advance. In the present specification, a method of laminating a thermoplastic resin composition to integrate the composition with a preformed functional optical sheet by injection molding may be referred to as an insert method. In addition, in the present specification, a functional optical lens used as an RX lens is a lens having a functional optical layer (functional optical sheet) on the optical surface of the lens, and is used particularly for power sunglasses and the like.

However, as in the functional optical lens disclosed in Patent Document 1, a polarizing sheet constituted of a polarizing film layer and a polyamide sheet layer tends to produce wavy (ripple) pattern on the surface thereof.

The defects of the occurrence of such a wavy (ripple) pattern can be corrected by the pressure of the melted thermoplastic resin composition when the thermoplastic resin composition is laminated to the functional optical sheet by the insert method. However, some rejects that failed to be corrected sufficiently to meet the quality as a functional optical lens are also produced.

Accordingly, after manufacturing the functional optical lens, a pass/fail test is performed in a quality inspection mainly based on a visual appearance inspection, and those have failed the pass/fail test are to be removed. In addition, the occurrence of this reject is empirically known to be about 30%. The present inventors found a problem that, as a result of this, about 30% of the functional optical lenses manufactured with the thickness as large as 9 to 15 mm fail in the pass/fail test and removed, and thus the material loss of the thermoplastic resin increases. In particular, in a case where a polyamide resin is used for a thermoplastic resin composition, because of high price of a polyamide, a large amount of the material loss of the thermoplastic resin is a significant problem from the perspective of manufacturing cost of the functional optical lens.

Accordingly, the present inventors diligently studied a process of laminating a thermoplastic resin composition to a functional optical sheet by injection molding, and as a result, accomplished the present invention. That is, the present inventors realized that the material loss of the resin can be reduced by performing the process of laminating the thermoplastic resin composition to the functional optical sheet by injection molding in two stages.

Specifically, a functional optical laminate having a thickness of about from 1.5 to 2.5 mm is formed in the first stage of the injection molding, and is subjected to a pass/fail test. Thereafter, a second stage of the injection molding is further performed on the functional optical laminate that has passed the pass/fail test, and a functional optical lens having a thickness of approximately 9 to 15 mm is completed. Thus, the functional optical lens can be subjected to the pass/fail test in a state of the functional optical laminate having a small thickness, and thus the material loss of the thermoplastic resin can be reduced compared to the case of performing a pass/fail test after the functional optical lens is completed.

Hereinafter, embodiments of the present invention will be described with reference to the drawings. In the following, the same or corresponding elements are denoted by the same reference numerals throughout all the drawings to omit duplicate descriptions.

### Functional optical sheet

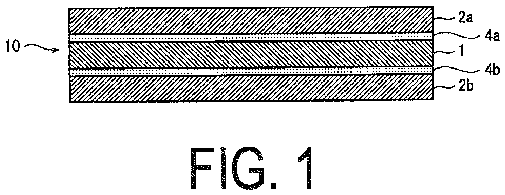

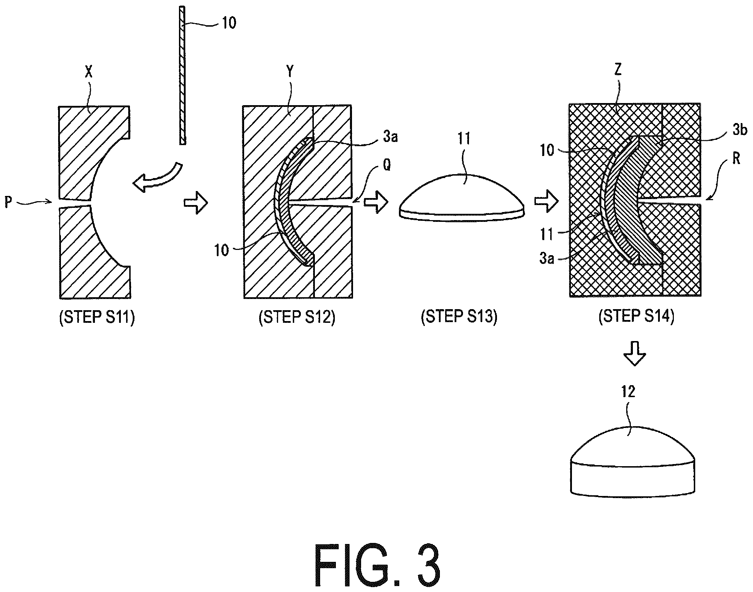

In the present embodiment, in manufacturing a functional optical lens 12 (see FIG. 3 described later), a polarizing sheet 10 is provided using a polarizing film as a functional optical film and a polyamide as a thermoplastic resin sheet to be laminated to both surfaces of the functional optical film via an adhesive. In the present embodiment, a functional optical lens 12 having a polarizing sheet 10 composed of a polarizing film and a polyamide is described as an example, but the functional optical lens 12 may be an optical lens having, for example, an anti-glare property and/or photochromicity. In addition, in the present embodiment, a polyamide resin composition is described as an example of the thermoplastic resin that is laminated to a polarizing sheet 10, but the thermoplastic resin composition to be laminated may be, for example, a transparent thermoplastic resin composition, such as an acrylic-based resin, an ester-based resin, a styrene-based resin, a polyvinyl chloride-based resin, a polyamide resin, or a polycarbonate. FIG. 1 is a cross-sectional view schematically illustrating an example of a polarizing sheet 10 constituting a functional optical lens 12 according to an embodiment of the present invention. As illustrated in FIG. 1, the polarizing sheet 10 has a configuration in which a polarizing film layer 1 constituted of a polarizing film is sandwiched between two polyamide sheet layers 2a and 2b via adhesive layers 4a and 4b. The two polyamide sheet layers 2a and 2b are formed of the same or different types of polyamide, and both may have the same or different thicknesses.

The polarizing film constituting the polarizing film layer 1 can be formed by molding into a film shape by an extrusion molding method, a cast molding method, or the like, and subjecting the film to a treatment, such as stretching and heating, as necessary. For example, the polarizing film can be formed by subjecting a uniaxially or biaxially stretched film (preferably a uniaxially stretched film) made of a material, such as polyvinyl alcohol (PVA), polyvinyl acetal, and polyvinyl butyral, to a treatment, such as doping with iodine or dichroic dye.

The thickness of the polarizing film is, for example, not greater than 200 µm (approximately from 5 to 200 µm), and preferably approximately from 10 to 100 µm. When the thickness is less than 5 µm, the desired optical properties will not be sufficiently obtained, and when the thickness exceeds 200 µm, handling properties may be impaired, which is disadvantageous in terms of reducing weight and cost.

Both polyamide sheet layers 2a and 2b are formed of polyamide as a main component. Examples of the polyamide include: a polycondensate of a diamine component and a dicarboxylic acid component, the diamine component including an aliphatic diamine such as hexamethylene diamine, and trimethylhexamethylenediamine, an alicyclic diamine such as bis(p-aminocyclohexy)methane, 3,3-dimethyl-4,4-diaminodicyclohexymethane, and 3,3-dimethyl-4,4-diaminodicyclohexymethane, and an aromatic diamine such as m-xylylene amine, and the dicarboxylic acid component including an aliphatic dicarboxylic acid such as adipic acid, and dodecanedioic acid, an alicyclic dicarboxylic acid such as cyclohexane-1,4-dicarboxylic acid, and an aromatic dicarboxylic acid such as isophthalic acid, and terephthalic acid; and a polycondensate of lactams, such as caprolactam.

For example, a polyamide having excellent transparency, such as an alicyclic polyamide, is preferably used as the polyamide constituting the polyamide sheet layers 2a and 2b. The alicyclic polyamide refers to a polyamide in which the main component is constituted of at least one of an alicyclic diamine or an alicyclic dicarboxylic acid, and more preferably, an alicyclic polyamide in which the main component is constituted of an alicyclic diamine and an aliphatic dicarboxylic acid is used. Examples of such an alicyclic polyamide include "Trogamid CX7323" available from Daicel-Evonik Ltd. and "Grilamid TR-90" available from EMS-CHEMIE AG.

In addition, the polyamide may be crystalline or non-crystalline, and preferably one with low crystallinity or a microcrystalline polyamide having a crystal size smaller than the wavelength of light may be used. An amorphous polyamide (amorphous nylon or microcrystalline polyamide) is preferably used in view of transparency, but a crystalline polyamide that exhibits light milky white color, such as "Nylon 12" may also be used.

Polyamides are generally known to have high Abbe numbers and are suitable as optical materials. In addition, the refractive index of the polyamide can be selected as appropriate for the application of the optical lens, and is, for example, approximately from 1.1 to 2.0, preferably approximately from 1.2 to 1.9, and more preferably approximately from 1.3 to 1.8. A material with a high Abbe number tends to have a lower refractive index, but polyamide has both a high Abbe number and high refractive index, and has preferred optical functions in a well-balanced manner.

In addition, the polyamide sheet layers 2a and 2b can be formed by an extrusion molding method, a cast molding method, or the like. The polyamide sheet layers 2a and 2b can be constituted of an unstretched polyamide sheet, or a uniaxially or biaxially stretched polyamide sheet, or the like.

The stretching is performed by a roll method, a tenter method, a tube method, or the like. The stretching temperature is, for example, approximately from 80 to 250°C, preferably approximately from 110 to 250°C, and more preferably approximately from 120 to 200°C. The stretch ratio can be adjusted as appropriate for the type, thickness, and the like of the optical film and the polyamide.

The thickness of the polyamide sheet layers 2a and 2b may be, for example, approximately from 20 to 1000 µm, preferably approximately from 50 to 800 µm, and more preferably approximately from 100 to 500 µm.

The adhesive forming the adhesive layers 4a and 4b is not particularly limited as long as it can adhere the polarizing film layer 1 and the polyamide sheet layers 2a and 2b, and, for example, a commonly used adhesive, such as an acrylic-based adhesive, an ester-based adhesive, a urethane-based adhesive, an ether-based adhesive, an epoxy-based adhesive, or a vinylacetate-based adhesive, can be used. Among them, an adhesive for dry laminate, such as an acrylic-based adhesive and an ester-based adhesive (especially, ester-based polyurethane), is preferably used. Examples of such an adhesive include an acrylic-based adhesive "Saivinol AT-250" available from Saiden Chemical Industry Co., Ltd.; and a dry laminate adhesive composed of a combination of a main agent, such as an ester-based polyurethane "TM - 595", and a curing agent (such as trade name "CAT-10L", "CAT RT85"), available from Toyo-Moton Ltd.

The thickness of the adhesive layers 4a and 4b after curing may be, for example, approximately from 0.1 to 80 µm, typically from 1 to 60 µm, preferably approximately from 2 to 50 µm, and more preferably approximately from 5 to 40 µm.

### Method for manufacturing functional optical lens

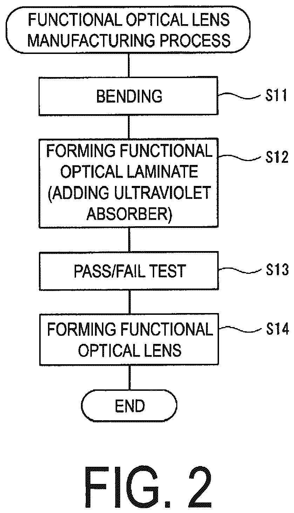

A method for manufacturing a functional optical lens 12 will be described with reference to FIGS. 2 and 3. FIG. 2 is a flowchart illustrating an example of a method for manufacturing a functional optical lens 12 according to an embodiment of the present invention. FIG. 3 is a schematic diagram illustrating each step of the manufacturing method illustrated in FIG. 2. In the present embodiment, a polyamide resin composition is described as an example of the thermoplastic resin composition that is laminated to a polarizing sheet 10, but the thermoplastic resin composition to be laminated may be, for example, a transparent thermoplastic resin composition, such as an acrylic-based resin, an ester-based resin, a styrene-based resin, a polyvinyl chloride-based resin, a polyamide resin, or a polycarbonate.

First, as illustrated in FIGS. 2 and 3, bending (step S11) is performed, wherein the polarizing sheet 10 is bent into a predetermined curved shape using a bending mold X.

The bending can be performed, for example, by the following method. That is, the polarizing sheet 10 formed of the thermoplastic resin composition is heated to a moldable temperature (for example, about 130 degrees), and then disposed in a bending mold X. Then, air is evacuated through a fine suction hole P provided in the bending mold X, thereby cooling the polarizing sheet 10 while keeping the sheet deformed with vacuum pressure to form a molded product. The bending is, however, not limited to this vacuum molding. For example, pressure molding, which performs compression molding with compressed air, may be used.

Next, forming a functional optical laminate (step S12) is performed, wherein the polyamide resin composition is laminated by the first stage of the injection molding on the concave side (backside) of the polarizing sheet 10 that has been subjected to bending in the bending in step S11 to form a functional optical laminate 11. That is, the polarizing sheet 10 that has been subjected to bending is placed in an injection mold Y, and the injection mold Y is closed. Then, the polyamide resin composition is heat-melted, for example, at about 280 degrees, and injected into a cavity in the injection mold Y through an injection hole Q provided in the injection mold Y. Thus, the polyamide resin composition is heat fused to the concave side (backside) of the polarizing sheet 10 to form a polyamide resin molding layer 3a. As illustrated in FIG. 3, the polyamide resin molding layer 3a is laminated on the concave side of the polarizing sheet 10 to have a substantially uniform thickness along the curved surface shape of the polarizing sheet 10. Thus, the polyamide resin molding layer 3a also has a curved surface shape similar to the polarizing sheet 10. In addition, a material similar to the polyamide sheet layers 2a and 2b described above can be used for the polyamide resin composition.

Here, an ultraviolet absorber may be added to the polyamide resin molding layer 3a that is laminated on the concave side of the polarizing sheet 10. That is, the polyamide resin molding layer 3a may be formed by adding an ultraviolet absorber to the polyamide resin composition that is the raw material for injection molding.

Examples of the method of adding the ultraviolet light absorber include a method of blending a polyamide resin composition that is the raw material for injection molding and an ultraviolet absorber, then pelletizing the blend by melt-kneading with an extruder (compound method), and injection molding the pellet. Alternatively, a method of injection molding a dry blend of the raw material polyamide resin composition and the ultraviolet absorber may be used.

Furthermore, in addition to the ultraviolet absorber described above, the polyamide resin molding layer 3a may further include various additives, for example, a stabilizer such as a thermal stabilizer and an antioxidant, a plasticizer, a lubricant, a filler, a colorant, a flame retardant, and an antistatic agent.

In the first stage of the injection molding in step S12, a functional optical laminate 11 having a thickness of about 2.2 mm is formed. Examples of the functional optical laminate 11 formed in step S12 include an optical laminate having polarizability. The thickness of the functional optical laminate 11 formed in the first stage of the injection molding can be set based on the amount of the resin that can achieve injection pressure and injection time, with which the defects generated in the polarizing sheet 10 can be corrected, and is preferably from 1.5 to 2.5 mm, and particularly preferably from 1.8 to 2.4 mm.

Next, performing a pass/fail test (step S13) is carried out, wherein a quality inspection mainly based on a visual appearance inspection of the functional optical laminate 11 formed in the first stage of the injection molding in step S12 is performed the pass/fail test on the laminate. A functional optical laminate 11 that failed the pass/fail test in step S13 is excluded.

Here, to impart added value of design to sunglasses produced using the functional optical lenses 12, the functional optical lenses 12 may be dyed. Examples of the method for dyeing include a method of uniformly dyeing the entire lens surface. Other examples include a method of dyeing the lens with gradations from dark to light from the upper to the lower portions thereof (half dyeing or gradient dyeing). In the method of dyeing the lens with gradations from dark to light from the upper to the lower portions thereof, the functional optical laminate 11 may be dyed employing a gradient in immersion time, thus imparting a concentration gradient to the lens such that the upper side is darker and the lower side is lighter.

In the case of dyeing the functional optical lens 12, the dyeing is performed on the functional optical laminate 11 that has passed the quality inspection before the second stage of the injection molding (step S14) to be described later.

In the next step S14 (forming a functional optical lens), the second stage of the injection molding is performed on the functional optical laminate 11 that has passed the quality inspection in step S13. Specifically, the functional optical laminate 11 is placed in an injection mold Z, and the injection mold Z is closed. Then, the polyamide resin composition is heat-melted, for example, at about 280 degrees, and injected into a cavity in the injection mold Z through an injection hole R provided in the injection mold Z. Thus, the forming the functional optical lens is performed, wherein the polyamide resin composition is heat fused to the concave side (backside) of the polarizing sheet 10, in other words, to the surface of the concave side of the polyamide resin molding layer 3a, to laminate a polyamide resin molding layer 3b and to form the functional optical lens 12. As illustrated in FIG. 3, the polyamide resin molding layer 3b is laminated on the concave side of the polarizing sheet 10 (the concave side of the polyamide resin molding layer 3a) to have a substantially uniform thickness along the curved surface shape of the polyamide resin molding layer 3a. Thus, the polyamide resin molding layer 3b also has a curved shape similar to the polarizing sheet 10 and the polyamide resin molding layer 3a. In this manner, the polyamide resin molding layer 3b is further laminated on the polyamide resin molding layer 3a that has already been laminated, and thus the thickness of the formed functional optical lens 12 can be increased to about 2.2 mm to about 9 to 15 mm.

In the way as described above, the polyamide resin composition is further heat fused to the concave side (backside) of the functional optical laminate 11 that has passed the quality inspection in step S13 to produce the functional optical lens 12 having a thickness of about from 9 to 15 mm.

In addition, at least one surface of the produced functional optical lens 12 may be subjected to a processing treatment, such as hard coat treatment, anti-reflective treatment, anti-fogging treatment, anti-soil treatment, and mirror treatment, alone or in combination, as necessary.

The hard coat treatment can be performed by applying a well-known heat- or photo-curable resin to the surface and curing the resin. The thickness of the hard coat layer is, for example, approximately from 0.5 to 15 µm. The anti-reflective treatment is performed by forming a single layer or a plurality of layers composed of inorganic materials, such as silica, or organic materials, using a sol-gel method, a vacuum deposition method, or the like. The anti-fogging treatment can be performed by applying a hydrophilic resin; the anti-soil treatment can be performed by applying a fluorine-based organic compound by a vacuum vapor deposition method or the like; and the mirror processing can be performed by a method of vapor-depositing a metal, such as aluminum.

In addition, the quality inspection mainly based on the visual appearance inspection may be further performed on the functional optical lens 12 obtained in the manufacturing process described above. The pass/fail test has already been made by the quality inspection in step S13, and therefore, there is almost no functional optical lens 12 that fails in the pass/fail test during the quality check at this stage. It is effective, however, to perform the quality inspection again at this stage as a final inspection prior to delivery of the functional optical lens 12.

As described above, the method for manufacturing the functional optical lens 12 according to the present embodiment includes performing injection molding in two stages to form the polyamide resin molding layer 3 on the concave side of the polarizing sheet 10 as well as performing the quality inspection after the first stage of the injection molding. Therefore, the amount of material loss of the resin that would fail in the pass/fail test can be reduced compared to the method of forming the polyamide resin molding layer 3 with a desired thickness (for example, 9 to 15 mm) on the concave side of the polarizing sheet 10 by a single injection molding.

In addition, when the functional optical lens 12 according to the present embodiment is processed to produce a finished lens, the concave side (backside) of the functional optical lens 12 is cut and subjected to smoothing processing of the surface and the like according to the desired optical power by an NC processing machine or the like. In the method for manufacturing the functional optical lens 12 according to the present embodiment, the polyamide resin molding layer 3a formed during the first stage of the injection molding includes an appropriate amount of an ultraviolet absorber. The portion of the concave side of the functional optical lens 12 that is cut by cutting is mainly a portion of the polyamide resin molding layer 3b, and thus the removal of the ultraviolet absorber can be prevented.

### Examples

### Example 1

### Production of polarizing sheet

An alicyclic polyamide resin (Trogamid CX7323 available from Daicel-Evonik Ltd.) was heat-melted, and the melted resin having a thickness of 630 µm was extruded through a T die with a φ40-mm single screw extruder. Then, the extruded melted resin was cooled with a chill roll, and then wound with a winding machine. The wound sheet was guided to a vertical uniaxial stretching device composed of four rolls capable of independently adjusting each of the rotational speed and the temperature, and was uniaxially stretched at a stretch ratio of 2.50 while heating to a temperature (approximately from 140 to 160°C) that is slightly higher than the glass transition temperature of the resin, to obtain polyamide sheet layers 2a and 2b having a thickness of 250 µm. A polyurethane-based adhesive (TM595/CAT-RT85) was applied at a thickness of 4 µm to one side of each of the resulting polyamide sheet layers 2a and 2b, and the polyamide sheet layers 2a and 2b were adhered to both sides of a polarizing film layer 1 constituted of a polyvinyl alcohol-based polarizing film (available from Polatechno Co., Ltd.) having a thickness of about 40 µm to form a polarizing sheet 10.

### Bending of polarizing sheet

The polarizing sheet 10 was cut out with a Thomson blade into a predetermined shape (a shape in which a pair of opposing edges of an approximate quadrilateral is outwardly bent in an approximately arc shape). The cut-out polarizing sheet 10 was placed in a far-infrared furnace at about 160°C and preheated for 1 to 2 minutes, then placed on a concave mold (bending mold X) with a radius of curvature of 87 mm and adjusted to a temperature of about 100°C, and vacuum-suctioned through a suction hole P provided in the lower part of the concave mold to obtain a polarizing sheet 10 having a predetermined curved surface shape.

Here, a quality inspection mainly based on a visual appearance inspection of the resulting polarizing sheet 10 was performed and the presence of "wavy pattern (ripple pattern)" of approximately 2 mm in length was observed on the entire sheet surface.

### First stage of injection molding

Next, the bent polarizing sheet 10 was disposed on the concave surface of a mold for 2.2-mm thickness lens (injection mold Y) installed in an injection molding machine. The mold for 2.2-mm thickness lens was closed, and then a polyamide resin composition (Trogamid CX7323 available from Daicel-Evonik Ltd.) melt-kneaded to 280°C was injected at a pressure of 200 MPa to mold a functional optical laminate 11 having a thickness of 2.2 mm.

### Visual inspection

Next, a visual inspection was performed on the molded functional optical laminate 11 as the quality inspection mainly based on the visual appearance inspection. As a result of the visual inspection, for about 70% of the molded functional optical laminates 11, the "wavy pattern (ripple pattern)" that had been present on the surface of the polarizing sheet 10 was found to have disappeared, and these molded functional optical laminates passed the inspection for the optical lens application. On the other hand, for about 30% of the molded functional optical laminates 11, the slight "wavy pattern (ripple pattern)" was found to be present and remained on the surface of the polarizing sheet 10, and these molded functional optical laminates failed the inspection.

### Second stage of injection molding

Next, the 2.2-mm thick functional optical laminate 11 that had passed the quality inspection in step S13 was disposed on the concave surface of a mold for 10.0-mm thickness lens (injection mold Z) installed in an injection molding machine. The mold for 10.0-mm thickness lens was closed, and then a polyamide resin composition (Trogamid CX7323 available from Daicel-Evonik Ltd.) melt-kneaded to 280°C was injected at a pressure of 200 MPa to complete a functional optical lens 12 having a thickness of 10.0 mm.

In addition, to improve scratch properties of the surface, a silicon-based hard coating solution was applied to the entire surface of the functional optical lens 12, heated in an oven at 100°C for 4 hours, polymerized, and cured to form a 2.2 µm hard coat film. Thereafter, the quality inspection of the functional optical lens 12 was further performed, and 98% passed the quality criteria for the functional optical lens made of polyamide.

### Example 2

Next, an example of dyeing the functional optical lens 12 will be described. The process up to the obtaining the functional optical laminate 11 having a thickness of 2.2 mm that had passed the inspection was the same as that of Example 1, and thus the description thereof is omitted.

The functional optical laminate 11 having a thickness of 2.2 mm obtained in Example 1 (a product that passed the inspection) was ultrasonic-cleaned in pure water, then immersed in a dyeing solution (85°C) with the composition shown below for 10 minutes, drawn up, rinsed with water, and allowed to air-dry. As a result of visual observation, no defects or the like were observed.

### Composition of dyeing solution

| | |
|---|---|
| (1)Dyeingassistant | |
| A mixtureof "Toho Salt" and "Carriant", trade name, available from TOHO Chemical Industry Co., Ltd.: | |
| | 1.50mass% |
| (2)Dye | |
| Anthraquinone-based disperse dye(pink): | 0.04 mass% |
| Anthraquinone-based dispersedye(blue): | 0.01 mass% |
| (3)Purewater: | 98.46 mass% |
| | 100.00 mass% |

Next, the dyed functional optical laminate 11 was disposed on the concave surface of a mold for 10.0-mm thickness lens (injection mold Z) installed in an injection molding machine. The mold for 10.0-mm thickness lens was closed, and then a polyamide resin composition (Trogamid CX7323 available from Daicel-Evonik Ltd.) melt-kneaded to 280°C was injected at a pressure of 200 MPa to mold a functional optical lens 12 having a thickness of 10.00 mm.

In addition, to improve scratch properties of the surface, a silicon-based hard coating solution was applied to the entire surface of the functional optical lens 12, heated in an oven at 100°C for 4 hours, polymerized, and cured to form a 2.2 µm hard coat film. Thereafter, the quality inspection of the functional optical lens 12 was further performed, and 96% passed the quality criteria for the functional optical lens made of polyamide.

From the above descriptions, many modifications and other embodiments of the present invention will be apparent to those skilled in the art. Accordingly, the above descriptions should be interpreted by way of illustration only and is provided for the purpose of teaching those skilled in the art the best mode of carrying out the present invention. The details of its structure and/or function can be substantially modified without departing from the spirit of the present invention.

### Industrial Applicability

The present invention can be widely used in the manufacture of optical lenses, such as those for sunglasses having an optical functionality.

### Reference Signs List

- 1: Polarizing film layer
- 2a: Polyamide sheet layer
- 2b: Polyamide sheet layer
- 3: Polyamide resin molding layer
- 3a: Polyamide resin molding layer
- 3b: Polyamide resin molding layer
- 10: Polarizing sheet
- 11: Functional optical laminate
- 12: Functional optical lens

## Claims

1. A method for manufacturing a functional optical lens, the method comprising:
bending a functional optical sheet to have a predetermined curved surface shape, the functional optical sheet being formed by laminating a thermoplastic resin sheet layer including a thermoplastic resin to a functional optical film layer including a functional optical film;
forming a functional optical laminate by laminating a thermoplastic resin composition by injection molding on a concave side of the functional optical sheet bent in the bending; and
forming a functional optical lens by further laminating the thermoplastic resin composition by injection molding on the concave side of the functional optical sheet in the functional optical laminate formed in the forming the functional optical laminate.

2. The method for manufacturing a functional optical lens according to claim 1, the method further comprising performing a pass/fail test on the functional optical laminate formed in the forming the functional optical laminate, after executing the forming the functional optical laminate and before executing the forming the functional optical lens;
wherein, in the forming the functional optical lens, the thermoplastic resin composition is further laminated by injection molding on the concave side of the functional optical sheet in a functional optical laminate that has passed the pass/fail test of the performing the pass/fail test.

3. The method for manufacturing a functional optical lens according to claim 1 or 2, wherein the thermoplastic resin sheet layer and the thermoplastic resin composition are polyamide resin compositions.

4. The method for manufacturing a functional optical lens according to any one of claims 1 to 3, wherein a thickness of the functional optical laminate formed in the forming the functional optical laminate is from 1.5 to 2.5 mm, and a thickness of the functional optical lens formed in the forming the functional optical lens is from 9 to 15 mm.

5. The method for manufacturing a functional optical lens according to any one of claims 1 to 4, wherein an ultraviolet absorber is added to the thermoplastic resin composition that is to be laminated by injection molding on the concave side of the functional optical sheet in the forming the functional optical laminate.

6. The method for manufacturing a functional optical lens according to any one of claims 1 to 5, wherein the functional optical lens has, as an optical function, at least one of an anti-glare property, photochromicity, or polarization.
